(19) Europäisches Patentamt
European Patent Office
Office européen des brevets

(11) Publication number: **0 004 371 A1**

# (12) EUROPEAN PATENT APPLICATION

(21) Application number: **79100841.0**

(22) Date of filing: **20.03.79**

(51) Int. Cl.²: **A 01 G 25/09**, A 01 G 25/16, G 05 B 19/04

(30) Priority: **24.03.78 US 889777**

(43) Date of publication of application: **03.10.79 Bulletin 79/20**

(84) Designated Contracting States: **DE FR GB IT**

(71) Applicant: **EATON CORPORATION, 100 Erieview Plaza, Cleveland Ohio 44114 (US)**

(72) Inventor: **Hamilton, Martin Wayne, 24 W. Berkley Dr., Arlington Hts. Illinois (US)**

(74) Representative: **Wagner, Karl H., P.O. Box 246 Gewuerzmuehlstrasse 5, D-8000 München 22 (DE)**

## (54) Overwatering prevention control system.

(57) A control system is provided for remotely controlling a mobile irrigation system having a traveling sprinkler. A pressure switch (34) located on the traveling sprinkler senses a predetermined water pressure build-up and energizes the control system which includes timing circuitry (38) for initially maintaining the sprinkler in a stationary irrigating position. After the passage of a predetermined time interval, the system engages the traveling sprinkler drive mechanism to permit movement thereof. Movement of the traveling sprinkler is thereafter monitored by a magnetic pick-up type wheel sensor (30) which sends a signal to the system timing circuitry (38) indicating that the traveling sprinkler is moving at a minimum required rate of speed. The timing circuitry (38) is also effective for detecting stalling of the traveling sprinkler within a certain time interval due to various causes, whereupon sprinkling is automatically shut down to prevent overwatering. Automatic pump shut down is achieved by transmitting (54) a coded signal from the traveling sprinkler which is received by a remotely located receiver near the water pump. The coded signal is compared with a reference signal to insure that extraneous signals do no shut down the pump.

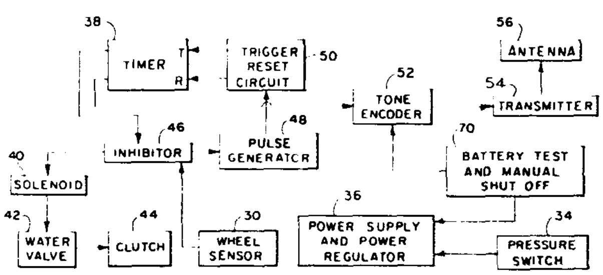


EP 0 004 371 A1

# OVERWATERING PREVENTION CONTROL SYSTEM

## FIELD OF THE INVENTION

The invention relates to an overwatering prevention control system for remotely shutting down a mobile irrigation system.

## DESCRIPTION OF THE PRIOR ART

Mobile irrigation systems incorporating the use of a traveling sprinkler unit have become increasingly widely used with the advent of long length irrigation hose of the type which can withstand high pressures and high tension loading. The traveling sprinkler often derives its propulstion from a winch cable drum arrangement which reels an anchored cable onto the cable drum. Typically, the traveling sprinkler moves along a straight travel lane in the crop field and requires an irrigation hose approximately half the length of the irrigation lane if the field has a main irrigation line located in the center of the field. The length of the travel lanes can be any length but generally have a maximum of about 2,600 feet. As can be appreciated from the comparatively long length of the travel lanes, the driving forces necessary to overcome water hose drag and weight can be significant, especially when the travel lane contains obstructions or has a surface texture which increases hose drag. A common problem encountered during the irrigation operation is stall-out of the traveling sprinkler resulting in an overwatering condition at that particular position in the travel lane. A stalled traveling sprinkler generally results in wasted irrigation water and often results in crop damage. Since one of the main objectives of an automated system is to permit one man to maintain several traveling sprinklers, breakdowns of the type described significantly reduce system efficiency by increasing manpower requirements to insure proper operation of the mobile irrigation system and, thus, increase irrigation costs.

## SUMMARY OF THE INVENTION

In the present invention a control system is provided for a mobile irrigation system for remotely controlling the movement of a traveling sprinkler. The system also provides for monitoring movement of the sprinkler along the irrigation travel lane.

One feature of the invention includes a pressure switch mounted on the traveling sprinkler which activates the control circuitry in response to sensing water pressure above a predetermined level. Pressure developed by the irrigation pump is used to energize the control system and begin the irrigation cycle, thus, eliminating the necessity of having an operator make a special trip to the remotely located traveling sprinkler to engage its drive mechanism.

Another feature of the invention includes timing circuitry for preventing initial movement of the traveling sprinkler for a predetermined time interval to permit adequate irrigation of the first contact area. After the initial time interval, the timing circuitry automatically engages the traveling sprinkler drive winch which begins sprinkler movement.

Another feature of the invention includes timing circuitry for monitoring sprinkler movement. An output signal from a wheel sensor is sent to the timing circuitry for detecting wheel rotation. If no wheel rotation occurs within a predetermined time, a stall condition is assumed and the timing circuit will generate a signal to a tone encoder which sends a coded signal to a radio frequency transmitter. The transmitter sends the coded signal to a remotely located stationary receiver positioned near the irrigation pump. The receiver compares the incoming coded signal with an internally generated reference signal and generates a warning signal if the signals match. The use of the coded signal and comparison with a reference signal eliminates inadvertent system shut down from extraneous radio signals. The warning signal then activates a relay for shutting down the irrigation pump. The drop in water pressure caused by pump shut down results in the pressure switch located on the traveling sprinkler shutting down electrical power to the control circuitry, thus the entire irrigation system is shut off automatically in the event the traveling sprinkler stalls.

Another feature of the invention incorporates inhibiting circuitry which locks out the wheel sensor at the beginning of the irrigation cycle to permit the traveling sprinkler to remain stationary for an initial predetermined interval of time. This initial dwell is desirable to insure that the starting point along the irrigation travel lane receives a proportional share of irrigation water, since the overlap of the water spray pattern is minimal at the irrigation starting point.

## BRIEF DESCRIPTION OF THE DRAWINGS

FIGURE 1 pictorially represents a traveling sprinkler irrigation system.

FIGURE 2 is a block diagram illustrating the transmitter and associated components.

FIGURE 3 is a block diagram illustrating the receiver and associated components.

FIGURE 4 is an electrical schematic illustrating the circuitry of FIGURE 3.

## DETAILED DESCRIPTION OF THE DRAWINGS

Referring now to FIGURE 1, there is shown pictorially the basic components of a mobile irrigation system which includes a manually selectively energizable pump 10 having an inlet 12 which is, in turn, adapted to be connected to a supply of irrigation water (not shown). A supply line 14 has one end connected to the discharge port of pump 10 and the other end connected to a traveling sprinkler, indicated generally by reference numeral 16. In the presently preferred practice, the supply line 14 comprises a light weight flexible hose of any material suitable for water flow service and capable of withstanding the output pressure of the pump. The traveling sprinkler 16 includes a wheeled chassis 18, a hose reel 20, a rotatable sprinkler nozzle 22 and a power source 24. The power source may be of any suitable type, as for example, a small internal compustion engine, a water-operated reciprocating piston engine, or a water-operated turbine. The power source drives an on-board winch cable drum of any well known type (not shown) for winding up cable 26. The other end of cable 26 is secured to an anchor (not shown) so that the reeling action of the on-board power driven cable drum propels the traveling sprinkler along the desired irrigation travel lane.

The control system includes a transmitter mounted on top of the propulsion unit, an antenna and associated circuitry indicated generally by reference numeral 28. A wheel sensor 30 is positioned along the chassis 18 near the rim of one of the wheels and generates an electrical signal in response to wheel rotation. A radio frequency receiver 32 is located remotely from the traveling sprinkler and is preferably mounted near the irrigation pump 10 and includes associated circuitry for receiving control signals broadcast from transmitter 28.

Sprinkler nozzle 22 is of the type that continually rotates as the traveling sprinkler 16 moves along the irrigation path, thereby watering a large, generally rectangular crop area. As mentioned previously, travel lanes can vary up to approximately 2,600 feet, while the distance between travel lanes will vary from 100 feet to 400 feet. Considering the significantly long range covered by a traveling sprinkler and the extent of the area under irrigation that may be provided by several sprinklers, it then becomes increasinly important to have an automatic control system which will monitor the rate of sprinkler travel and provide an automatic shut-down in case the traveler is stalled out as the movement thereof is impeded.

The control system of the present invention will first be described with reference to the block diagrams illustrated in FIGURES 2 and 3. System operation is begun by selectively, either manually or remotely, energizing pump 10. Upon energization, pump 10 conveys a pressurized flow of irrigation water through hose 14 (FIGURE 1) to the traveling sprinkler 16 and discharges through nozzle 22 (FIGURE 1) where the pressure build-up is sensed by a pressure switch 34 as illustrated in the block diagram of FIGURE 2. Pressure switch 34 (not shown as a separate component in FIGURE 1) is operable to energize the control system electrical power supply 36 through a power regulator. In the presently preferred practice, electrical power is supplied to the individual control system components and radio frequency transmitter by preferably a twelve volt battery or three six-volt batteries connected in series. Energization of the power supply 36 immediately activates an electronic timer 38 which delays sending an energizing voltage signal to solenoid 40 for a first predetermined time interval of approximately 33-1/2 minutes. This 33-1/2 minute time interval can be varied to suit specific irrigation requirements. After passage of this first time interval, during which sprinkler nozzle 22 is rotating and delivering irrigating water, timer 38 subsequently activates solenoid 40 with a voltage signal preferably lasting for a second predetermined time interval of approximately 2-1/2 minutes. Upon energization, solenoid 40 engages a water valve 42 (omitted in FIGURE 1) which, in turn, engages a clutch 44 (omitted in FIGURE 1) for rotating the winch cable drum, not shown, driven by power unit 24 (FIGURE 1). The traveling sprinkler then begins movement along the irrigation travel lane.

An inhibitor circuit 46 is provided which is effective to electrically isolate the wheel sensor 30 from the control system. Upon termination of the 2-1/2 minute activation voltage to solenoid 40 inhibitor 46 is operative to activate wheel sensor 30. Simultaneously with the activation of wheel sensor 30, the timer 38-1/2 begins timing a third predetermined time interval preferably about 38 minutes which has been determined to be representative of a stalled condition.

Under normal operating conditions wheel sensor 30, which is comprised of a magnetic type pick-up mounted in association with one of the traveling sprinkler's wheels as shown in FIGURE 1, generates a signal pulse with each revolution of the wheel and which is received by pulse generator 48 which, in turn, generates a signal to a trigger-reset circuit 50. Trigger-reset circuit 50 then emits a signal to the reset input represented schematically by the black arrow pointing to "R" in timer block 38. Trigger-reset circuit 50 also generates a trigger signal to the trigger input as indicated by the black arrow pointing to "T" of timer 38, thus once again starting timer counting the 38-1/2 minute interval. As long as normal operation and movement of the traveling sprinkler continues, the time interval between consecutive wheel sensor signals will be less than the 38-1/2 minute timing interval counted by timer 38, and a trigger-reset condition will occur with each revolution of the wheels. However, if motion of the traveling sprinkler is impeded or the sprinkler movement is stalled out, the wheel sensor will not generate a signal within a time period less than the 38-1/2 minute interval counted by the timer, whereupon the timer will generate and transfer a control signal to a tone encoder 52.

The tone encoder 52 includes circuitry which generates a predetermined coded tone pattern. An on-board transmitter 54 is provided and receives the coded signal and transmits it through an antenna 56. A stationary antenna 58 receives the transmitted signal which is fed to a stationary receiver 32. As illustrated in FIGURE 3, the coded signal received by receiver 32 is transferred to clamp circuit 60 which limits the signal to an amplitude limited pulse. A comparator circuit 62 is provided which generates an internal reference signal which is compared with the incoming amplitude limited signal from the clamp circuit. The clamp circuit 50 generates an output signal only if the signal input matches the internally generated reference signal pulse. Thus, extraneous signals are not passed by the receiver 32. Additionally, a time delay 64 delays passage of the signal for approximately seven to ten seconds in order to filter out extraneous short term pulses that may be introduced into the control system through antenna 58. The time delayed signal then passes into a relay driver 66. Relay driver 66 generates a continuous pulse which is applied to a relay 68, which in response to the pulse is activated to then shut down pump 10. The subsequent drop in water pressure in hose 14 is then sensed by pressure switch 34 (FIGURE 2) whereupon the power supply to the remaining control system components is shut down.

Referring now to FIGURE 2, the control system includes a battery test circuit 70 for adjusting the battery voltage to insure that enough power is available to permit the traveling sprinkler to pass through one irrigation cycle. A manual shut-off switch, also represented by block 70, sends a shut-off pulse directly to tone encoder 52. The tone encoder thereafter responds in the manner hereinabove described.

Referring now to Fig. 4, there is shown a circuit diagram for the timer 38, inhibitor circuit 46, pulse generator 48, wheel sensor 30, and associated circuitry. Timer 38 includes a counter-timer 72 which is a commercially available integrated circuit having a programmed oscillator and can be purchased from Exar Integrated Systems, Inc., Sunnyvale, California, part number XR-2240. The counter-timer 72 has a series of output pins A through H located on its left-hand side in Fig. 4 and a series of output pins J through Q located on the right-hand side in Fig. 4. Also identified on counter-timer 72 along its left side are corresponding quantities representing binary counting time intervals T. For example, A corresponds to a period of T, B corresponds to a period of 2T, C corresponds to a period of 4T, and so on.

A resistor 74 is connected across terminals P and O and functions as a pull-up resistor for the internal oscillator in counter-timer 72.

A capacitor 76 has one end attached to a ground connection and the other end attached to output terminal M and functions as a bypass for the power supply to counter-timer 72.

A resistor 78 is connected between junctions 80 and 82, while a capacitor 84 has one end connected to a ground connection and the other end to junction 82. Junction 82 is connected to output terminal N of counter-timer 72. Resistor 78 and capacitor 84 determine the frequency of the internal oscillator in counter-timer 72.

Output pin J is connected to a ground connection while output pin Q is connected to the power supply at junction 86. Opposite output pin L is the letter "T" signifying a trigger input while opposite output pin K is the letter "R" signifying a reset input.

Trigger-reset circuit 50 includes capacitor 88 connected between a ground connection and junction 90 and a resistor 92 having one end connected in common with junction 90. Capacitor 88 and resistor 92 function as a time delay network which is required to trigger pin L. A transistor 94 has its emitter connected to ground, its collector connected to junction 96, and its base connected to a resistor 98. The other end of resistor 98 is connected to junction 100. Transistor 94 functions as a switch to discharge capacitor 88 to ground.

Pulse generator circuitry 48 includes a one-shot pulse generator 102 comprising an integrated ciruit which is commercially obtainable from a number of suppliers under a common part number 555 and includes terminals I, Z, S, U, Y, X, W and V. A resistor 104 is connected between junctions 106 and 108. A capacitor 110 is connected between junctions 112 and 114. Resistor 104 and capacitor 110 determine the pulse width of the output pulse from generator 102. Junction 108 is connected to output terminal X, while junction 112 is connected to junction 108 and to output terminal W. A capacitor 116 has one end connected to output terminal V and the other end connected to junction 114 and functions as a bypass for an internal voltage reference within pulse generator 102. Terminals U and Y are connected to power junctions 118 and 120. Terminal I is connected through junction 122 to ground. Output terminal Z transfers an output pulse from pulse generator 102 upon the occurrence of a ground condition at terminal S, to output terminal K located on counter-timer 72 and functions to reset the timer. The output pulse also passes via junction 100 through resistor 98 and turns on transistor 94 whereupon capacitor 88 is discharged to retrigger the timer 72. After transistor 94 is turned off by cessation of the output pulse, the time delay network formed by resistor 92 and capacitor 88 functions to retrigger counter-timer 72 at L. Resistor 124 connected between junctions 126 and 128 functions as a pull-up resistor to maintain the output pulse from Z at a high voltage level. Current passing through resistor 130 functions to momentarily pull junction 134 and terminal S toward ground, the effect of which will be subsequently described. A steering diode 136 connected between junctions 138 and 140 together with another steering diode 142 connected between junction 138 and 144 provide two different trigger inputs to the pulse generator 102, both of which will be subsequently described. A resistor 146 is connected between junction 140 and junction 148 while a capacitor 150 is also connected across junction 140 and 148.

Wheel sensor 30 includes a magnetically sensitive reed switch, not shown, and well known in the art, connected across junction 152, which is grounded through junction 246, and junction 154 which is connected to junction 148. The reed switch is in a normally open condition. It will be apparent to those having ordinary skill in the art that any other suitable switching arrangement could be utilized to detect wheel rotation. Closure of the reed switch grounds capacitor 150 which tends to charge through resistor 146 and diode 136, thereby pulling pin S toward ground resulting in a trigger effect on pin S. The internal circuitry of pulse generator 102 responds to the ground condition on S by emitting a pulse to pin Z. The output pulse then travels as described above and functions to reset and retrigger counter-timer 72.

Counter-timer 72 provides a binary coded output in the form of an off-on cycling voltage on pins A through H. The output of pin A is a repeating signal of 18 seconds at ground followed by 18 seconds high voltage which corresponds to letter T, pin B has an output of 2T or 36 seconds at ground followed by 36 seconds high, and similarly pin D has an output of 8T or 72 seconds at ground. The output time period at ground or high for pins E through H is determined by multiplying the quantity T times the indicated coefficient preceding it.

Returning now to the circuit description, a resistor 156 is connected across junction 158 and junction 160, a resistor 162 is connected across junctions 164 and 166, a resistor 168 is connected across junctions 170 and 172, and a resistor 174 is connected across junction 176 and output pin A. Resistors 156, 162, 168 and 174 function respectively as pull-up resistors for binary outputs A through H. A transistor 178 has its emitter connected to ground and its collector to junction 160 and its base through a resistor 180 connected to output terminal A of timer 72. A transistor 182 has its emitter connected to ground, its collector connected to junction 166, and its base connected to a resistor 184. Resistor 184 has its other end connected through junction 172 to terminal D. Transistor 182 functions to invert the voltage condition at pin D so that at the end of the 112T ground condition (arrived at by the summation of 16T, 32T, and 64T) a positive voltage condition exists at junction 185 for a duration of 8T or approximately 2-1/2 minutes. The 112T time interval, approximately 33-1/2 minutes, is designated as a first time interval and the 8T time interval is designated as a second time interval during which solenoid 40 is activated. In a similar manner transistor 178 functions to invert the voltage condition at pin A so that at the end of the 128T ground condition a positive voltage condition exists at junction 185A for a duration of 18 seconds followed by ground for 18 seconds. This voltage continues to cycle and is designated a control signal. The 128T time interval, approximately 38-1/2 minutes, corresponds to the maximum time allowed for one wheel revolution and id designated as a third time interval. The positive 8T output applied to junction 185 is used to drive a transistor 186 through a resistor 188 which, in turn, drives a power switch transistor 190 which, in turn, provides a ground return to activate solenoid 40. Solenoid 40 is connected across pins 190A and 190B. Diode 192 connected between junction 194 and 196 functions as a protective suppression diode for the solenoid. Resistor 198 is connected between junction 196 and the collector of transistor 186 and functions to limit the base drive to transistor 190. Transistors 186 and 190 thus function as power switches for solenoid 40.

Inhibitor 46 includes a capacitor 200 connected between junctions 202 and 204 and a resistor 206 connected between junctions 204 and junction 208. Resistor 206 and capacitor 200 function as a differentiaator circuitwhich is sensitive to the trailing edge of the 8T pulse. Upon termination of the 8T pulse, the differentiator circuit is effective for turning off transistor 210. Connected between the collector of transistor 210 (through junction 216) and junction 212 is a resistor 214 which functions as a collector load. In response to the turn-off of transistor 210, a positive momentary pulse is generated at junction 216. The momentary pulse is coupled through a capacitor 218 connected between junction 216 and 220 and to the gate of an SCR 222. A gate resistor 224 is connected between junction 220 and junction 226 which is in common with ground junction 228. The momentary pulse causes SCR 222 to fire thereby causing junction 230 connected to the anode of SCR 222 to drop to a ground potential. A load resistor 232 is connected between junction 230 and junction 234. A steering diode 236, connected between junction 238 and junction 240, is now returned to ground and functions to inhibit and isolate any further output voltage from pins E, F, or G of counter-timer 72, thereby locking solenoid 40 out of the control circuit. The firing of SCR 222 also acts to turn off a transistor switch 242 which has its collector connected to junction 244 and its emitter connected to ground junction 246. Up until the firing of SCR 222, transistor 242 has inhibited or locked the wheel sensor out of the control system. The transition from high to low voltage at junction 230 as the SCR 222 fires is also differentiated by a second differentiator circuit comprised of a resistor 248 and a capacitor 250, the capacitor being connected between junctions 252 and 144. A negative pulse is generated by resistor 248 and capacitor 250 which is coupled through steering diode 142, junctions 138 and 134 to pin S of the pulse generator 102, and triggers the pulse generator 102 and is followed by an output pulse from terminal Z, previously described, which pulse functions to initially reset and trigger counter-timer 72. It should be noted that resistor 146 functions to discharge capacitor 150 subsequent to engagement of the reed switch thereby permitting capacitor 150 to be grounded and recharged through resistor 130 and diode 136. After the solenoid has been activated and after a time period equivalent to 128T or approximately 38-1/2 minutes is counted by counter-timer 72, an on-off control pulse having an 18 second duration is sent to the tone encoder 52 through pins 255A and 255B. The signal path followed thereafter follows the block diagrams of Figs. 2 and 3.

Switch 255C is a schematic representation of pressure switch 34. Transistors 256, 258, and their associated circuitry comprise a voltage regulator. Resistor 260, LED 262, and Zener diode 264 comprise a battery test circuit. In conjunction with battery test load resistor 266, the voltage regulator and the battery test load circuitry are well known in the art.

Referring to Fig. 2, transmitter 54 is comprised of standard circuit components that are well known to those having ordinary skill in the art. In the presently preferred practice thr transmitter includes a high frequency crystal controlled oscillator, a high frequency driver, a power amplifier and an antenna matching network.

Tone encoder 52 includes a commercially available dual monolithic tone decoder connected as a tone generator and a suitable device is manufactured by Exar Integrated Systems, Inc., Sunnyvale, California, and has part number XR-2567. The circuitry associated with the tone encoder is described in detail in manufacturers' printed technical data sheets supplied with the tone encoder and further description of the device herein is deemed unnecessary.

Receiver 32 is a crystal controlled superhetrodyne receiver and may comprise any suitable type well known to those having ordinary skill in the art and has an audio output.

Clamp circuit 60 may be any suitable diode clamping circuit known in the art.

Comparator 62 is known in the art as a "phase lock loop circuit" and includes a commercially available integrated circuit component such as that manufactured by Exar Integrated Systems, Inc., Sunnyvale, California, part number XR-2567.

Time delay techniques are well known in the art and a delay circuit 64 is utilized to minimize false triggering caused by short term noise of interference.

Relay driver 66 may include circuitry utilizing a transistor or an SCR and functions to operate and turn on relay 68.

As mentioned previously relay 68 is effective for turning off pump 10.

The embodiments of the invention as shown and described above are representative of the inventive principles stated herein. It is to be understood that variations and departures can be made from the embodiment as shown without, however, departing from the scope of the appended claims.

## C L A I M S

WHAT IS CLAIMED IS:

1. An overwatering prevention system for use with a mobile irrigation system having stationary means operable upon selective energization to provide a source of pressurized irrigant and including movable conduit means through which the pressurized irrigant flows; said shut-off system comprising:

(a) vehicle means for traversing the terrain to be irrigated, said vehicle means including,

(i) nozzle means for discharging irrigant in a desired flow pattern over the terrain, said nozzle means being connected to said conduit means to receive pressurized irrigant therefrom,

(ii) an energizable source of electrical power,

(iii) pressure responsive means operable to energize said power source upon sensing irrigant pressure in said conduit reaching a predetermined level and operable to de-energize said power source upon sensing pressure in said conduit less than said predetermined level,

(iv) resettable timing means operable upon energization of said power source to measure time for a first predetermined time interval and operable to provide an indication of the lapse of said first interval and operable thereupon unless reset before said time interval has lapsed to emit a malfunction signal and to cease measuring time,

(v) means responsive to energization of said power source and operative to reset said timing means;

(vi) propulsion means operable in response to energization of said power source to cause said vehicle means to traverse the terrain to be irrigated,

(vii) traverse sensing means operable to provide an indication of movement of said vehicle means over the terrain,

(viii) means operable to reset said timing means before lapse of said first interval only upon receipt of said traverse indication from said sensing means,

(ix) transmitter means operative to broadcast an encoded signal in response to receipt of said malfunction signal from said timing means; and,

(b) stationary receiver means remote from said vehicle means and operable to detect said encoded signal and to thereupon de-energize said source of pressurized irrigant.

2. The system defined in claim 1, wherein said propulsion means includes fluid motor means and latchable means operable to direct a portion of said irrigant flow to said fluid motor means in response to energization of said power source.

3. The system defined in claim 1 wherein said propulsion means includes

(1) motor means;

(2) solenoid means operable to activate said motor means upon energization of said power source; and,

(3) inhibiting means operable to isolate said solenoid means from said power source after lapse of a second predetermined time period.

4. The system defined in claim 1 further comprising signal generator means operable to generate a reference signal comparable to said encoded signal and means operable to compare said reference signal and said encoded signal and operable to de-energize said irrigant source only when said reference signal and said encoded signal match.

5. The system defined in claim 1 wherein said reset means includes a one-shot pulse generator operable to reset said timing means in response to the indication from said traverse sensor.

6. The system defined in claim 1 wherein said propulsion means includes

(1) wheel motor means,

(2) solenoid means operable to activate said motor means upon energization of said power source; and,

(3) inhibiting means operable to isolate said solenoid means from said power source after lapse of a second predetermined time period and further operable to prevent activation of said propulsion means during a preselected portion of the initial one of said first time period.

7. A control system for automatically controlling the operation of a mobile irrigation system, said irrigation system including a traveling sprinkler and a propulsion means for driving said sprinkler to traverse the terrain to be irrigated, a pump, a water supply, and a fluid conduit from said pump to said traveling sprinkler, said control system comprising:

(a) a source of electrical power;

(b) pressure switch means effective to switch on said source of electrical power to a portion of said control system in response to water pressure above a predetermined value;

(c) means for sensing movement of the sprinkler over the terrain, said movement sensing means generating an output signal in response to such sprinkler movement;

(d) means for generating a pulse in response to receiving said output signal from said movement sensing means, said pulse generating means further generating a pulse in response to switching on said electrical power;

(e) trigger-reset circuit means having an input connected to said pulse generating means to receive said pulse therefrom, said trigger-reset means generating a signal in response to receiving said pulse;

(f) means for engaging said propulsion means;

(g) timing circuit means responsive to receiving said signal from said trigger-reset means and operable to activate said engaging means, said timing circuit means further generating a control signal in response to receiving said trigger-reset signal only after sensing a first predetermined time interval during which said trigger-reset signal is not generated, said timing circuit means being effective upon receiving said trigger-reset signal before passage of said first time interval for resetting to again sense said first time interval;

(h) tone encoder means for generating a coded signal in response to receiving said control signal from said timing circuit means;

(i) means for transmitting said coded signal from said tone encoder means, said transmitter means located on said traveling sprinkler;

(j) means for receiving said transmitter signal, said receiving means located remotely from said traveling sprinkler;

(k) means for comparing said signal received from said receiving means to an established signal pattern, said comparing means generating a warning signal if said transmitted signal matches said established signal pattern; and

(l) means for turning off said pump in response to receiving said warning signal, whereupon said pressure switch switches off said source of electrical power and said timing circuit means is reset and said traveling sprinkler is shut off.

8. A control system as defined in claim 7, wherein (a) said timing circuit means is effective to sense a second predetermined time interval upon switching on of said electrical power, said second time interval being sensed before said first time interval; and further including

(b) inhibiting means for locking out said movement sensing means during said second time interval;

(c) said trigger-reset means effective to reset said timing circuit means in response to receiving a pulse from said pulse generating means upon termination of said second time interval, said timing circuit means thereafter effective for initiating sensing of said first time interval;

(d) said inhibiting means effective for unlocking said movement sensing means in response to termination of said second time interval and said activation of said engaging means.

9. An overwatering prevention subsystem for use with an irrigation system having stationary means operable to provide a source of pressurized irrigant and a movable conduit means having said irrigant flowing therethrough and a movable vehicle means with discharge nozzle means connected to said conduit means for discharging irrigant in a desired pattern, said subsystem comprising:

(a) means associated with said vehicle means and operative to sense movement of said vehicle means and provide an indication thereof; and

(b) means associated with said vehicle means and operable to effect disablement of said stationary irrigant source remotely therefrom in response to

(i) loss of indication of movement of said vehicle means from said sensing means and

(ii) loss of pressure in said conduit below said predetermined level.

0004371

1/2

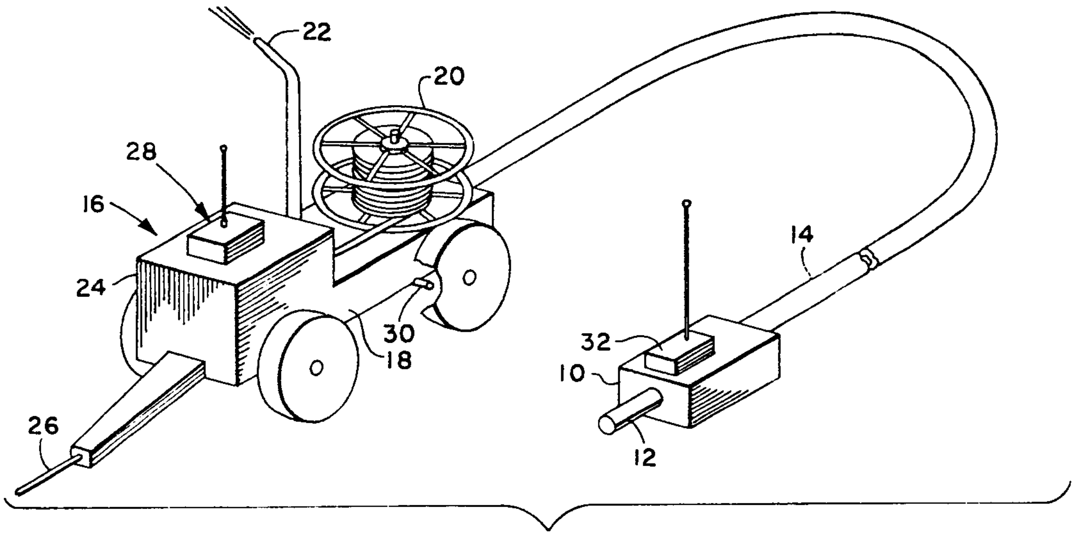


Fig. 1

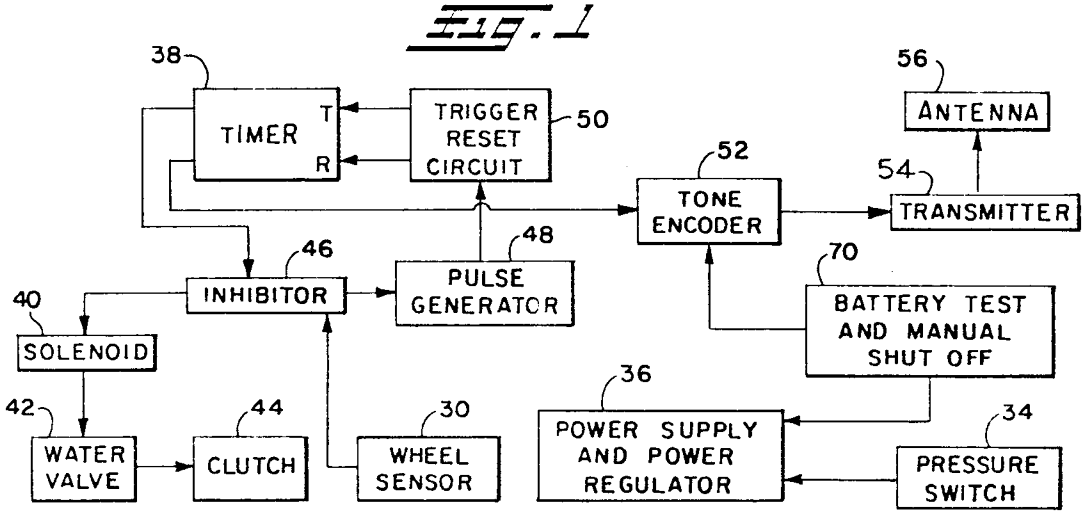


Fig. 2

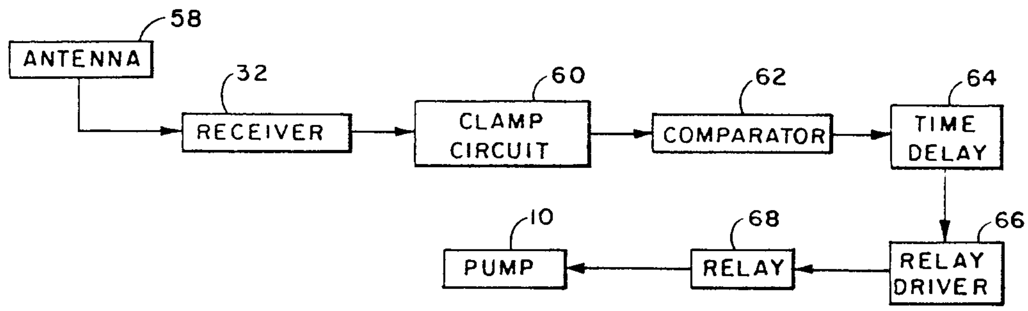


Fig. 3

0004371

2/2

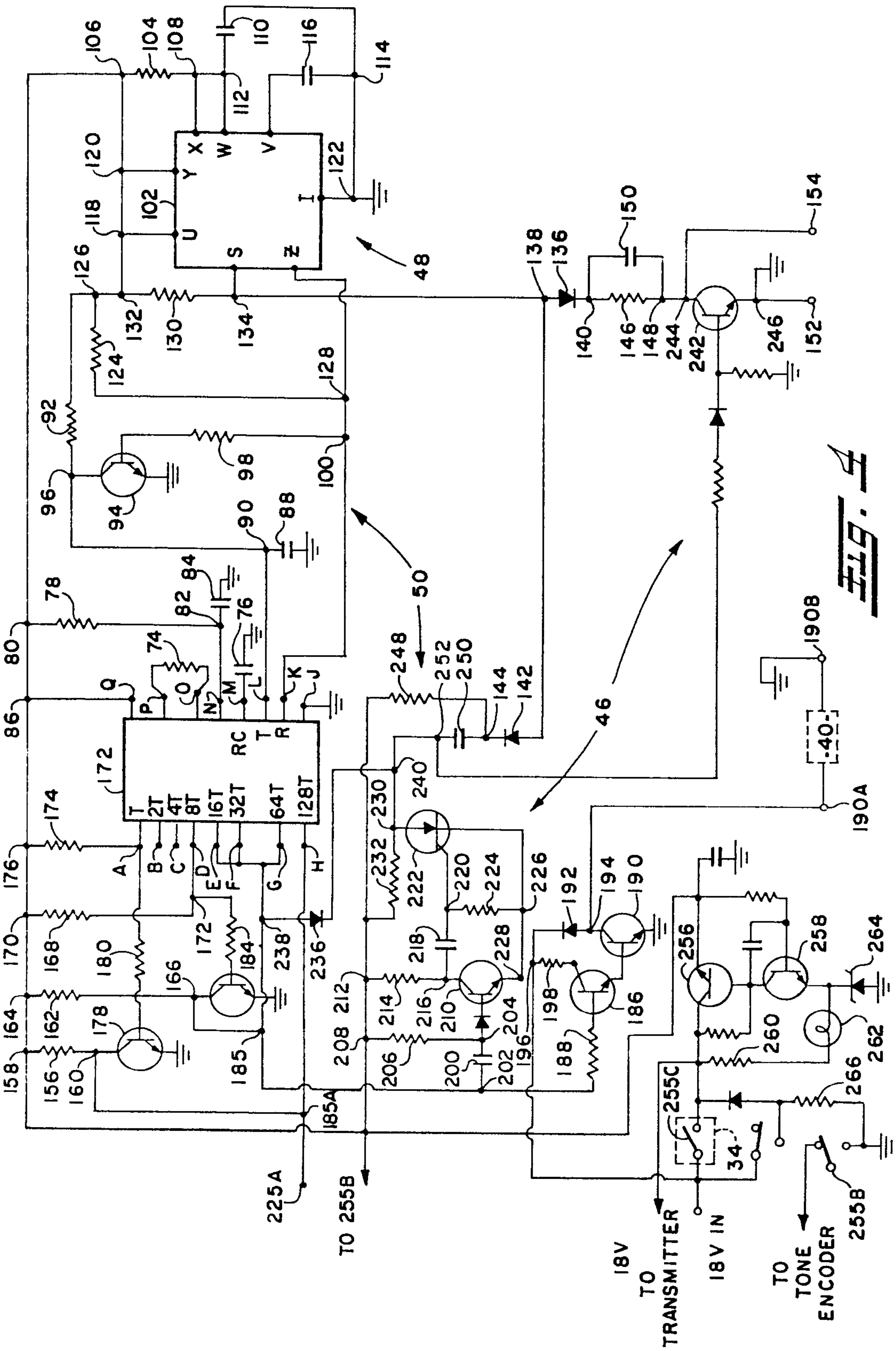


FIG. 4

0004371

European Patent Office

# EUROPEAN SEARCH REPORT

Application number
EP 79 10 0841

## DOCUMENTS CONSIDERED TO BE RELEVANT

| Category | Citation of document with indication, where appropriate, of relevant passages | Relevant to claim |
|---|---|---|
| | DE - A - 2 128 913 (H.-J. WINTER)<br>* Page 5, lines 5-9; page 7, line 22 - page 9, line 13; page 12; lines 14-17; figures 1,3 *<br>-- | 1,2,7,9 |
| | FR - A - 2 105 348 (P. DEJOIE)<br>* Page 1, lines 1-5 and 28-31; page 7, lines 2-13 *<br>-- | 1,2,6,9 |
| | FR - A - 2 187 208 (LOCKWOOD CORP.)<br>* Page 1, lines 1-5; page 8, line 36 - page 9, line 12; page 12, line 27 - page 13, line 6; figure 4 *<br>-- | 1,7,9 |
| | US - A - 3 628 731 (W.N. PHILLIPS)<br>* Column 1, lines 19-44; column 3, lines 41-45; figure 10 *<br>-- | 1,7,9 |
| | FR - A - 2 323 318 (ROHREN- UND PUMPENWERK RUDOLF BAUER G.M.B.H.)<br>* Page 7, lines 1-9; page 8, lines 2-16 *<br>-- | 1 |
| | FR - A - 2 269 856 (IRRIFRANCE)<br>* Page 1, lines 1-5; page 5, lines 14-29; figure 3 *<br>-- | 6 |
| | ./. | |

CLASSIFICATION OF THE APPLICATION (Int. Cl.²)

A 01 G 25/09
A 01 G 25/16//
G 05 B 19/04

TECHNICAL FIELDS SEARCHED (Int.Cl.²)

A 01 G 25/09
25/16
G 05 B 19/04

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 15-06-1979 | POINT |

EPO Form 1503.1 06.78

European Patent Office

# EUROPEAN SEARCH REPORT

0004371

Application number

EP 79 10 0841



## DOCUMENTS CONSIDERED TO BE RELEVANT

| Category | Citation of document with indication, where appropriate, of relevant passages | Relevant to claim | CLASSIFICATION OF THE APPLICATION (Int. Cl.²) |
|---|---|---|---|
| A | GB - A - 1 099 321 (J.D. PETT)<br>* Page 1, lines 16-30; page 2, lines 15-32; figure 3 *<br>-- | 1,2 | |
| A | US - A - 3 785 564 (A. BALDOCCHI)<br>* Abstract; figure 12 *<br>---- | 1 | |
| | | | TECHNICAL FIELDS SEARCHED (Int. Cl.²) |

EPO Form 1503.2 06.78